# EUROPEAN PATENT APPLICATION

(11) **EP 4 819 128 A1**
(43) Date of publication of application: **07.10.2026**
(21) Application number: 26168186.0
(22) Date of filing: 26.03.2026
(51) Int. Cl.: G10L 15/26, G10L 25/60, H04L 12/18, H04L 65/80

(54) **METHOD AND SYSTEM FOR BOLSTERING DATA TRANSCRIPTION ACCURACY WITH SELECTIVE STREAM IMPROVEMENTS**

(30) Priority: 01.04.2025 US 202519097718
(71) Applicant: Mitel Networks Corporation, Ottawa, Ontario K2K 3K1 (CA)
(72) Inventor: TSIATSIKAS, Zisis, Thessaloniki (GR); TSOKANA, Sofia, Kanata (CA); PAPADOPOULOS, Gavriil, Athens (GR)
(74) Representative: McDougall, James

(57) **Abstract**

The invention relates to a method and a system for bolstering data transcription accuracy with selective stream improvements, whereby the method comprises the steps of starting, by a first, a second or any further user, a meeting in a collaborative or meeting tool, then determining, by the collaborative or meeting tool, if the overall audio quality of audio data in the meeting is over a predetermined audio quality value and if it is feeding, by the collaborative or meeting tool, the audio data to an audio transcription module, and finally, transcribing, by the audio transcription module the audio data.

## Description

### FIELD

This disclosure relates generally to electronic communication methods and systems and more particularly to methods and systems for bolstering data transcription accuracy with selective stream improvements.

### BACKGROUND

In audio transcription scenarios that run on the edge, there is often the problem of hardware constraints that may limit the efficiency of advanced artificial intelligence (Al) transcription models (i.e., whisper large, etc.). Therefore, edge devices cannot utilize efficiently expensive Al models for tasks like transcription on devices, because they don't have the resource capacity to do so (resource capacity can be either low CPU power, limited ROM/RAM, multitasking limitations, etc.). Instead, usual approaches rely on smaller Al models which offer a decent transcription quality, like for example whisper-tiny, etc. For the purposes of the present invention, edge, edge device or edge computing means hardware components that serve as an entry point into a network and process data at or near the source instead of sending it back to central servers for analysis. The key factor for scoring good results with light models is the quality of the input audio data. Existing solutions usually process the audio data before they feed them in a transcription engine. However, this does not bring all audio data to a higher quality level, because even the best Al cannot generate higher quality data from poor input data. Accordingly, improved audio transcription methods and system are generally desired.

Any discussion of problems and solutions described in this section has been included in this disclosure solely for the purposes of providing a context for the present disclosure. Such should not be taken as an admission that any or all of the discussion is prior art or was known at the time the invention was made.

### SUMMARY OF THE DISCLOSURE

This summary is provided to introduce a selection of concepts in a simplified form. Exemplary concepts are described in further detail in the detailed description of example embodiments of the disclosure below. This summary is not intended to necessarily identify key features or essential features of the claimed subject matter, nor is it intended to be used to limit the scope of the claimed subject matter.

The invention relates to a method and a system for bolstering data transcription accuracy with selective stream improvements, whereby the method comprises the steps of starting, by a first, a second or any further user, a meeting in a collaborative or meeting tool, then determining, by the collaborative or meeting tool, if the overall audio quality of audio data in the meeting is over a predetermined audio quality value and if it is feeding, by the collaborative or meeting tool, the audio data to an audio transcription module, and finally transcribing, by the audio transcription module, the audio data.

The present invention is based on the object of overcoming the problems of the state of the art and, in particular, to provide a method and a corresponding system for bolstering data transcription accuracy with selective stream improvements. In particular, a method and system to optimize the Al transcription model performance (i.e., accuracy), by improving the quality of the audio data.

This object is solved by a method having the features according to claim 1 and a system having the features of claim 14. Preferred embodiments of the invention are defined in the respective dependent claims.

According to the invention, a method for bolstering data transcription accuracy with selective stream improvements is provided, wherein the method comprises the steps of:
- starting, by a first, a second or any further user, a meeting in a collaborative or meeting tool;
- determining, by the collaborative or meeting tool, if the overall audio quality of audio data in the meeting is over a predefined audio quality value;
   and if it is,
- feeding, by the collaborative or meeting tool, the audio data to an audio transcription module; and
- transcribing, by the audio transcription module, the audio data.ld

According to a preferred embodiment, the predefined audio quality value is over 70% preferred over 80% and most preferred over 90% wherein audio quality values over 95% to 100% are optimal.

According to another preferred embodiment, before the step of feeding the audio data to the audio transcription module, the method further comprises:
- checking, by the collaborative or meeting tool, if the audio data exceeds a predefined audio data size threshold;
- feeding, by the collaborative or meeting tool, the audio data to an audio transcription module if the audio data does not exceed a predefined audio data size threshold;
- transcribing, by the audio transcription module, the audio data; and/or
wherein, if the audio data exceeds the predefined audio data size threshold, the method further comprises:
- compressing, by the collaborative or meeting tool, the audio data before feeding it to the audio transcription module.

For the purposes of the invention, the audio data size threshold is defined as the maximum data size that can be processed by the audio transcription module without a system crash or error message occurring and the transcription then not being executed or being terminated prematurely due to the amount of data. 100% of this value corresponds to the amount of data that can still be processed.

According to yet another preferred embodiment, the predefined audio data size threshold is under 100% preferred under 98% and most preferred under 90% wherein audio data threshold under 80% to 70% are optimal, wherein 100% is the maximum value at which the audio transcription module can still process data at all.

According to another preferred embodiment, after the step of starting, the meeting the method further comprises:
- determining, by the collaborative or meeting tool or a device of the first, of the second and/or of any further user, if any other devices are present in a physical room together with each other of the device of the first, the second or any further user;
   and if not,
- determining, by the collaborative or meeting tool, if the overall audio quality of audio data in the meeting is over a predefined audio quality value;
   and if it is,
- feeding, by the collaborative or meeting tool, the audio data to the audio transcription module; and
- transcribing, by the audio transcription module, the audio data.

To determine if devices are present in the same physical room, different metrics can be used. For example, audio samples can be compared to determine if they have the same origin, or geolocation data of the devices or IP addresses of the devices and any other metrics that are suitable for solving this problem can be used here.

According to still another preferred embodiment, after starting the meeting or after determining that other devices are present in a physical room together with each other of the device of the first, of the second or of any further user, the method further comprises:
- receiving and comparing, by the collaborative or meeting tool, an audio sample quality obtained from a device of the first, the second and/or any further user;
- creating, by the collaborative or meeting tool, a sorted list for the obtained audio sample quality of the device of the first, the second and/or any further user;
- evaluating, by the collaborative or meeting tool, the overall audio quality based on the audio sample quality obtained from the device of the first, the second and/or any further user; and
- selecting, by the collaborative or meeting tool, the device of the first, the second and/or any further user having the best audio sample quality to feed the audio data into the audio transcription module.

To evaluate or determine the audio sample quality there are several known metrics which can be used here. For example, to determine if the audio sample is too quiet the Root Mean Square amplitude can be used to get and evaluate the loudness, or the Signal to noise ratio (SNR) can be used to examine how much noise an audio sample contains. Using a side-by-side comparison of the previous metrics would be sufficient to determine which sample should be used.

Further, according to a preferred embodiment, if the overall audio quality is not over the predefined audio quality value, the method further comprises:
- re-negotiating, by the collaborative or meeting tool, an audio stream for the device of the first, the second and/or any further user for which the overall audio quality was not over the predefined audio quality value;
- re-determining, by the collaborative or meeting tool, if the overall audio quality of audio data in the meeting is over the predefined audio quality value;
   and if it is,
- feeding, by the collaborative or meeting tool the audio data to the audio transcription module; and
- transcribing, by the audio transcription module, the audio data.

According to yet another preferred embodiment, in case only parts of the audio data from one or more device of the first, the second and/or any further user that have to be transcribed in any case by one or more device of the first, the second and/or any further user, the method further comprises:
- re-negotiating, by the collaborative or meeting tool, an audio stream for one or more device of the first, the second and/or any further user only for the parts of the audio data that have to be transcribed in any case by one or more device of the first, the second and/or any further user;
- feeding, by the collaborative or meeting tool only, the parts of the audio data to the audio transcription module that have to be transcribed in any case by one or more device of the first, the second and/or any further user; and
- transcribing, by the audio transcription module, only the parts of the audio data that have to be transcribed in any case by one or more device of the first, the second and/or any further user.

According to yet another preferred embodiment, the method further comprises repeating the steps of re-negotiating an audio stream and re-determining the overall audio quality until the overall audio quality is over the predefined audio quality value.

According to yet another preferred embodiment, the method further comprises:
- evaluating, by the collaborative and meeting tool, how many times a renegotiation and subsequent re-determination of the audio quality has been performed;
- combining, by the collaborative or meeting tool, the audio sample data of the device of the first, the second and/or any further user, if the evaluation has been performed up to a predefined number of times;
- feeding, by the collaborative or meeting tool, the audio data to the audio transcription module; and
- transcribing, by the audio transcription module, the audio data.

According to yet another preferred embodiment, the predefined number of times the evaluation has been performed is 6 times, preferred 4 times and most preferred 3 times wherein 2 to 1 time(s) are optimal.

According to yet another preferred embodiment, the method further comprises:
- monitoring, by the collaborative or meeting tool, the audio stream of the meeting for the occurrence of technical or specialized jargon or segments with complex terms, accents and/or fast speech; and
- selectively selecting, by the collaborative or meeting tool, an advanced Al transcription model as audio transcription module.

According to yet another preferred embodiment, before the step of feeding the audio data to an audio transcription module, the method further comprises using by the collaborative or meeting tool an artificial intelligence, Al, to further modify and optimize the overall audio data quality.

According to yet another embodiment the method comprises selecting, by the collaborative or meeting tool, the device of the first, the second and/or any further user to feed the audio data into the audio transcription module, wherein the selection is based on the sensitivity of the data and/or on the established network quality of the device. Among multiple participant/user devices in the same conference room, the endpoint device with the best stream quality (network quality) can be selected to transcribe private information (i.e., private/sensitive data content, etc.), or information that has been classified as important (i.e., medical, financial content, etc.). If none of the participant/user devices have established a connection that meets a certain threshold, it is checked, e.g., by the collaborative or meeting tool, whether there is a device that has the resources to renegotiate the expected stream quality or that can renegotiate with a minimum number of tries, thereby reducing iterations, CPU cycles and the like and thus saving resources.

According to the invention, a corresponding system for bolstering data transcription accuracy with selective stream improvements is provided, wherein the system is configured to perform the method according to any of the claims 1 to 13.

According to yet another preferred embodiment, the collaborative or meeting tool is a part of a server or is deployed on a server; and/or the collaborative or meeting tool is part of a client application of a device of a first, a second, and/or any further user; and/or the audio transcription module is deployed on a server and/or is deployed on a device of a first, a second, and/or any further user; and/or the audio transcription module comprises an artificial intelligence, Al, transcription model and/or an advanced artificial intelligence, Al, transcription model.

It has also to be noted that aspects of the invention have been described with reference to different subject matters. In particular, some aspects or embodiments have been described with reference to apparatus type claims, whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular combinations between features relating to the apparatus type claims and features relating to the method type claims are considered to be disclosed. In addition, features relating to one of the embodiments may be combined with other features of another embodiment, the drawings or the claims, where possible. The invention and embodiments thereof will be described below in further detail in connection with the drawing(s).

All of these embodiments are intended to be within the scope of the invention herein disclosed. These and other embodiments will become readily apparent to those skilled in the art from the following detailed description of certain embodiments having reference to the attached figures, the invention not being limited to any particular embodiment(s) disclosed.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
Fig. 1 shows a schematic illustration of a re-negotiation process of the proposed method which is triggered by background noise according to an embodiment of the invention.
Fig. 2 shows a sequence diagram of a workflow of the proposed method according to another embodiment of the invention.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

To make the AI transcription both efficient and accurate on smaller devices, an optimization solution approach is proposed for audio enhancements. Such a solution can include various scenarios or aspects. However, according to the present invention, it is not essential that all of these scenarios or aspects are applied in order to arrive at the inventive solution. Rather, these scenarios or aspects are optional and, when applied synergistically, can further improve the overall audio quality. In the following, some of the main aspects of the invention are briefly described and then explained in more detail:
1. Network scenario 1: Dynamic adjustment (re-negotiation) of network audio stream quality based on real-time conditions (e.g., background noise) and the amount of data that require transcription. The combination of these two parameters can allow a lower-end device (less CPU power, less ROM/RAM) to use the Al model more efficiently even with less resources. The improvement in the audio quality will result in less resources for the Al model.
2. Network scenario 2: In cases where collaborative transcription (i.e., multiple devices transcribe parts of the same audio) is required, the network stream quality is tweaked only for certain audio clips, in selected devices. Once again, this procedure will allow the Al model to use less resources, since the transcription functionality won't be necessary for the vast amount of audio data captured, but only for a part of them.
3. Physical space scenario - e.g., Meeting room: Between multiple transcription devices in the same room with similar transcription capabilities, the device with the best audio quality for the same audio samples is selected. This can either be due to the spatial conditions (i.e., the room does not have soundproof mechanisms which can absorb sound vibration or sound waves) or the hardware capabilities of the different devices.
4. Selective use of advanced Al models: In the devices that receive the worst audio quality from physical space and in cases where it is not possible to improve the stream quality in this case, it is necessary to select more advanced Al transcription models that will fulfil the task accurately.
5. Audio Compression: After ensuring that the audio quality from the stream perspective is fixed and the audio quality exceeds a certain threshold, a compression mechanism to the audio samples is further applied with the aim of reducing their file size. Keeping in mind that the quality remains high due to optimization in the stream, but the file size is reduced so that the processing requirements on the model side is lowered. This gives the benefit that the Al model receives a smaller audio input and thus the relevant CPU and memory consumption remains low.

Aspect 1: The first aspect in the inventive solution concerns dynamic network stream quality optimization. Audio quality often fluctuates due to factors like background noise, voice clarity, device Wi-Fi/mobile signal reception, etc. and of course the room conditions which may create different copies of the same wave, which results in a distorted audio signal received by the participants. The goal is to assess audio input in real time and determine the key quality factors that impact transcription accuracy. To achieve this, the method/system utilizes techniques for noise detection and clarity assessment to evaluate incoming audio and dynamically adjust quality settings. Once audio quality metrics are established, the system makes dynamic adjustments to enhance clarity on the network media stream level (e.g., codec renegotiation). For example, if there is significant background noise, the system might lower the stream bitrate to concentrate on key speech frequencies, resulting in clearer, more focused audio. This optimization must occur before transcription begins, allowing the device to "clean up" the audio, so the Al transcription model has better-quality input to process.

For example, the session or meeting starts with a stream established with codec G.729 and then with the proposed method a better codec is re-negotiated, say Speex, when the background noise exceeds a threshold. With G.729, 80% of accuracy (e.g., Word Error Rate) in non-noisy scenarios and 50% of accuracy in noisy ones is achieved. With switch to Speex, the 80% WER (Word Error Rate) will be preserved even in a noisy environment. The result is that the same Al model can be used (e.g., a lightweight model), but the audio quality is improved. This selection can be also made taking into account the audio quality from the physical space. Considering a room of participants that participate in the meeting, the audio quality level is monitored on each device and the device that receives the most quality audio samples is selected in order to use it as the transcription input.

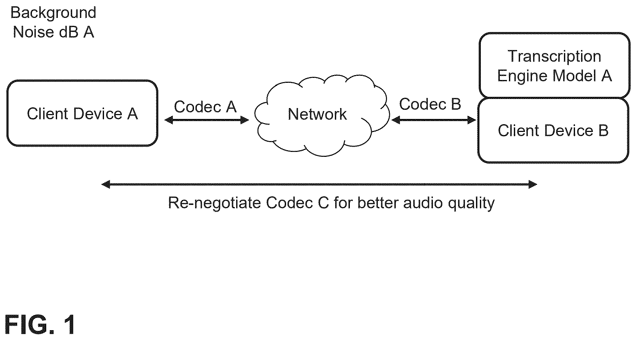

Fig. 1 depicts a re-negotiation process of the proposed method/system which is triggered by the background noise. Here, background noise is introduced by Client Device A, therefore the Codec A used by Client Device A is not optimal for an endpoint Client Device B which uses Codec B. Especially, the audio quality with this codec setup is not good for the transcription of the audio by the transcription Engine Model A. Therefore, by re-negotiating the stream quality to Codec C, the endpoint Client Device B receives a better audio quality and thus the local transcription process is optimized.

High-end devices can handle complex noise cancellation and sophisticated processing without compromising transcription speed. Low-end devices, however, benefit from these adaptive optimizations because they limit resource usage to necessary adjustments, keeping CPU and memory load minimal. Thus, they achieve similar transcription accuracy with fewer hardware demands.

Aspect 2: In certain scenarios where the transcript comes as a combination of the transcripts of the different devices, the stream quality is improved only in the parts that each device needs to transcribe. This can be either defined by the role of the user or the sequence of the discussion that is going on. For example, in General Data Protection Regulation (GDPR) related scenarios, the transcripts that concern each participant and need to stay in the relevant device will need to be transcribed locally by audio samples having a decent quality. This means that Aspect 1 needs to be applied selectively in these cases, per device, by improving the stream quality in the audio samples of interest.

Aspect 3: Considering a scenario in a meeting room where more than one participant carries devices with transcription capabilities, it is needed to select which device will execute the transcription task. The condition to select the device is the sound quality that is received from the device. This means that the samples between the devices must be compared and the one that provides the best audio sample quality is selected. This makes sense especially in scenarios where the presenter is moving in different spots in the physical room. Transcription tasks, especially real-time ones, can consume a significant amount of RAM for audio buffering, model loading, and processing. Offloading the task to a device with better audio quality reduces RAM requirements on low-capability devices, freeing up memory resources.

Aspect 4: Another aspect is to make selective use of advanced Al transcription models. Rather than using complex Al models on the entire audio stream, the method/system recognizes when only specific segments of audio require higher accuracy. If the audio includes technical jargon or important sections with low-confidence words, the device will predict this need for high accuracy and activate a more advanced transcription model only for these parts. For example, if the initial Al model encounters complex terms, accents, or rapid speech that lowers its confidence in the transcription, it signals for an upgrade in processing. Additionally, the algorithm detects areas within the audio where higher complexity is likely, such as technical discussions, industry jargon, or even personal names. The method/system may even monitor changes in pacing, pauses, or other inconsistencies in speech. Selective activation reduces CPU, RAM, and ROM demand, as complex processing is reserved for specific moments. Smaller devices avoid the strain of continuously running high-end models, instead relying on brief, on-demand accuracy boosts to maintain quality.

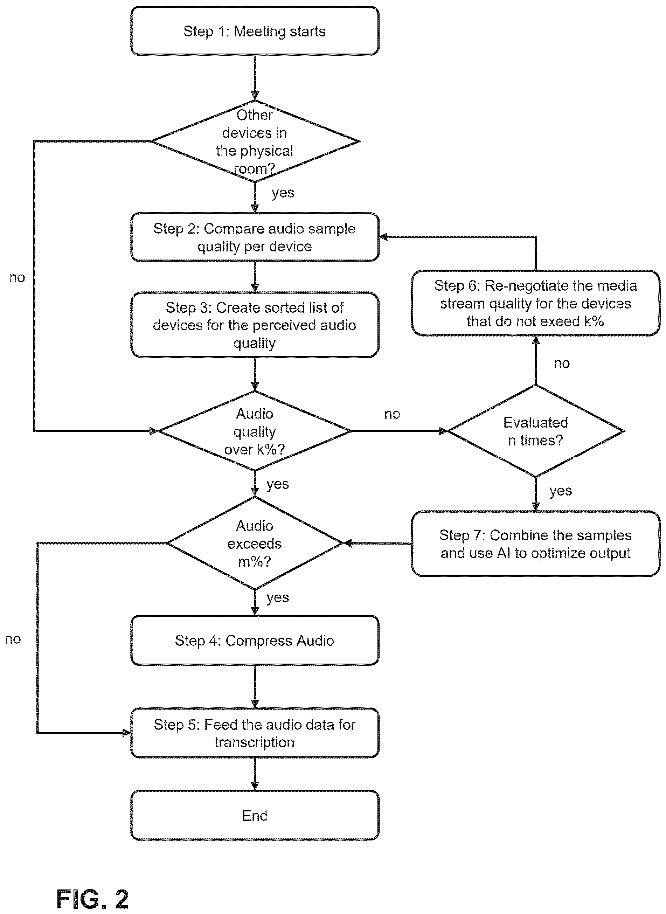

Fig. 2 shows a diagram of a workflow designed to optimize audio input and transcription quality in a collaborative or meeting environment. The process begins when a meeting starts (step 1). Together with the start of the meeting or later on, a check for the presence of multiple devices available in the room is initiated. One approach to determine this could be to detect the same sound inputs from multiple microphones. Another way pertains to the identification of the network addresses and location that can derived from this information. If multiple devices are detected, the system evaluates the audio sample quality from each device (Step 2) participating in the meeting. One approach is to evaluate the samples in a server or the collaborative or meeting environment, however it is also possible to use the same method of evaluation in each device separately. This evaluation is followed by the creation of a ranked list (Step 3), prioritizing devices based on their perceived audio quality (e.g., on top is the device with the best audio sample quality). By identifying the optimal audio source, the method/system ensures that transcription accuracy is maximized. Whether the top device of the list is considered or only one device is present, the system evaluates whether the audio quality exceeds a predefined threshold (k%) or exceeds a predefined audio quality value. This value is preferably above 70%, particularly preferably above 80% and optimally above 90% to 100%. This step serves as a preliminary filter, ensuring that substandard audio quality does not compromise the upcoming operations.

If the audio does not meet the k% threshold, the method/system optionally performs re-evaluations up to a specified number of times by initiating re-negotiation of media stream quality for underperforming devices (see step 6). Once re-negotiation occurs, the process loops back to re-evaluate the audio quality (step 2).

If the audio quality meets the k% threshold, then the audio data can proceed optionally either compressed or uncompressed to transcription (step 5), ensuring accurate conversion into text. The method/system can check if the audio data is of a predefined size or does not exceed a predefined audio data size threshold (exceeds m% in Fig. 2) and if not, can optionally compress the audio data (step 4).

Optionally in step 7, even if after the re-negotiation the audio quality is marginally below the k% threshold, the method/system combines multiple samples and can additionally use Al to optimize the final output which will be the input in the transcription machine. The entire process is designed to ensure adaptability, efficient use of resources and the reliable production of high-quality transcription results.

The present invention is well suited for areas such as medical meetings or online consultations as well as for meetings in the legal and financial field due to the higher reliability on the transcript of a meeting provided at the end.

Furthermore, this invention can further increase the reliability of medical transcriptions, e.g., in telemedicine sessions or doctor-patient consultations, where accuracy is crucial, the inventive method/system could selectively use advanced models for transcribing specialized medical terminology, patient details, and names of medications. This ensures that critical information is captured accurately, supporting better patient records without requiring constant use of high-resource models.

A similar approach to medical transcriptions is also possible in legal and financial calls. For legal discussions, depositions, or financial advice calls, the system could detect when specific legal or financial terms requiring precise transcription are used. Advanced models would be activated during complex portions of the conversation to accurately capture key terms, specific names, ensuring the reliability of the transcription.

The proposed solution optimizes Al transcription on edge devices by dynamically improving audio stream quality, selectively using advanced Al models, and intelligently delegating tasks across devices in collaborative environments. By adapting audio quality settings in real-time based on noise levels, network conditions and device capabilities, the system ensures enhanced input clarity without taxing low-end devices. It applies targeted improvements to specific audio segments, such as critical technical jargon, allowing lightweight models to achieve high accuracy with minimal resources. Furthermore, in multidevice setups, transcription tasks are assigned to the device with the best audio reception, maximizing efficiency while preserving low-end device resources. This approach extends transcription capabilities to a broader range of hardware, enabling businesses to offer high-quality services to users with limited device capacity while maintaining compliance and scalability for diverse use cases, including healthcare, legal, and accessibility scenarios.

In this inventive solution, a network stream re-negotiation mechanism is introduced as a way to improve the audio quality samples received in the endpoint's devices. In this way, the data are not processed after they arrive on the user device, but it is only played with the network quality which results in better audio samples. Additionally, the received audio data may be compressed so that the file size is reduced and thus making the transcription processing lighter.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

## Claims

1. A method for bolstering data transcription accuracy with selective stream improvements, wherein the method comprises the steps of:
- starting, by a first, a second or any further user a meeting in a collaborative or meeting tool;
- determining, by the collaborative or meeting tool, if the overall audio quality of audio data in the meeting is over a predefined audio quality value;
and if it is,
- feeding, by the collaborative or meeting tool the audio data to an audio transcription module; and
- transcribing, by the audio transcription module the audio data.

2. The method according to claim 1, wherein the predefined audio quality value is over 70%, preferred over 80% and most preferred over 90%, wherein audio quality values over 90% to 100% are optimal.

3. The method according to claim 1 or claim 2, wherein before the step of feeding the audio data to the audio transcription module the method further comprises:
- checking, by the collaborative or meeting tool, if the audio data exceeds a predefined audio data size threshold;
- feeding, by the collaborative or meeting tool, the audio data to an audio transcription module if the audio data does not exceed a predefined audio data size threshold;
- transcribing, by the audio transcription module, the audio data; and/or
wherein if the audio data exceeds the predefined audio data size threshold, the method further comprises:
- compressing, by the collaborative or meeting tool, the audio data before feeding it to the audio transcription module.

4. The method according to any preceding claim, wherein the predefined audio data size threshold is under 100%, preferred under 98% and most preferred under 90%, wherein audio data threshold under 80% to 70% are optimal, wherein 100% is the maximum value at which the audio transcription module can still process data at all.

5. The method according to any preceding claim, wherein after the step of starting the meeting the method further comprises:
- determining, by the collaborative or meeting tool or a device of the first, the second and/or any further user, if any other devices are present in a physical room together with one or more device of the first, the second or any further user;
and if not,
- determining, by the collaborative or meeting tool, if the overall audio quality of audio data in the meeting is over a predefined audio quality value;
and if it is,
- feeding, by the collaborative or meeting tool, the audio data to the audio transcription module; and
- transcribing, by the audio transcription module the audio data.

6. The method according to any preceding claim, wherein after starting the meeting or after determining that other devices are present in a physical room together with one or more device of the first, the second or any further user the method further comprises:
- receiving and comparing, by the collaborative or meeting tool, an audio sample quality obtained from a device of the first, the second and/or any further user;
- creating, by the collaborative or meeting tool, a sorted list for the obtained audio sample quality of the device of the first, the second and/or any further user;
- evaluating, by the collaborative or meeting tool, the overall audio quality based on the audio sample quality obtained from the device of the first, the second and/or any further user; and
- selecting, by the collaborative or meeting tool, the device of the first, the second and/or any further user having the best audio sample quality to feed the audio data into the audio transcription module.

7. The method according to any preceding claim, wherein if the overall audio quality is not over the predefined audio quality value the method further comprises:
- re-negotiating, by the collaborative or meeting tool, an audio stream for the device of the first, the second and/or any further user for which the overall audio quality was not over the predefined audio quality value;
- re-determining, by the collaborative or meeting tool, if the overall audio quality of audio data in the meeting is over the predefined audio quality value;
and if it is,
- feeding, by the collaborative or meeting tool, the audio data to the audio transcription module; and
- transcribing, by the audio transcription module the audio data.

8. The method according to claim 7, wherein in case only parts of the audio data from one or more device of the first, the second and/or any further user have to be transcribed in any case by the one or more device of the first, the second and/or any further user, the method further comprises:
- re-negotiating, by the collaborative or meeting tool, an audio stream for one or more device of the first, the second and/or any further user only for the parts of the audio data that have to be transcribed in any case by one or more device of the first, the second and/or any further user;
- feeding, by the collaborative or meeting tool, only the parts of the audio data to the audio transcription module that have to be transcribed in any case by one or more device of the first, the second and/or any further user; and
- transcribing, by the audio transcription module, only the parts of the audio data that have to be transcribed in any case by one or more device of the first, the second and/or any further user.

9. The method according to any preceding claim, wherein the method further comprises repeating the steps of re-negotiating an audio stream and re-determining the overall audio quality until the overall audio quality is over the predefined audio quality value.

10. The method according to any preceding claim, wherein the method further comprises:
- evaluating, by the collaborative and meeting tool, how many times a renegotiation and subsequent re-determination of the audio quality has been performed;
- combining, by the collaborative or meeting tool, the audio sample data of the device of the first, the second and/or any further user if the evaluation has been performed up to a predefined number of times;
- feeding, by the collaborative or meeting tool, the audio data to the audio transcription module; and
- transcribing, by the audio transcription module, the audio data.

11. The method according to any preceding claim, wherein the predefined number of times the evaluation has been performed is 6 times, preferred 4 times and most preferred 3 times, wherein 2 to 1 time(s) are optimal.

12. The method according to any preceding claim, wherein the method further comprises:
- monitoring, by the collaborative or meeting tool, the audio stream of the meeting for the occurrence of technical or specialized jargon or segments with complex terms, accents and/or fast speech; and
- selectively selecting, by the collaborative or meeting tool, an advanced Al transcription model as audio transcription module.

13. The method according to any preceding claim, wherein before the step of feeding the audio data to an audio transcription module the method further comprises using, by the collaborative or meeting tool, an artificial intelligence, Al, to further modify and optimize the overall audio data quality and/or wherein the method comprises selecting, by the collaborative or meeting tool, the device of the first, the second and/or any further user to feed the audio data into the audio transcription module, wherein the selection is based on the privacy or sensitivity of the data and/or on the established network quality of the device.

14. A system for bolstering data transcription accuracy with selective stream improvements, wherein the system is configured to perform the method according to any of claims 1 to 13.

15. The system according to claim 14, wherein the collaborative or meeting tool is a part of a server or is deployed on a server; and/or
wherein the collaborative or meeting tool is part of a device of a first, a second, and/or any further user or of a client application on said device; and/or
wherein the audio transcription module is deployed on a server and/or is deployed on a device of a first, a second, and/or any further user; and/or
wherein the audio transcription module comprises an artificial intelligence, Al, transcription model and/or an advanced artificial intelligence, Al, transcription model.
